# EUROPÄISCHE PATENTSCHRIFT

(11) **EP 1 310 388 B1**
(45) Veröffentlichungstag und Bekanntmachung des Hinweises auf die Patenterteilung: **25.06.2008**
(21) Anmeldenummer: 02024348.1
(22) Anmeldetag: 02.11.2002
(51) Int. Cl.: B60G 17/052

(54) **Niveauregelventil zum selbsttägigen Konstanthalten der Fahrzeughöhe eines Nutzfahrzeuges mit Luftfederung**
Load levelling valve for keeping constant the height of a commercial vehicle with pneumatic suspension
Soupape de régulation de niveau pour maintenir constante automatiquement la hauteur d'un véhicule utilitaire à suspension pneumatique

(30) Priorität: 08.11.2001 DE 10154778
(43) Veröffentlichungstag der Anmeldung: 14.05.2003
(73) Patentinhaber: Haldex Brake Products GmbH, 69123 Heidelberg (DE)
(72) Erfinder: Sulzyc, Georg, 69168 Wiesloch (DE)
(74) Vertreter: Rehberg Hüppe + Partner

(56) Entgegenhaltungen:
- EP-A- 0 556 086
- DE-C- 4 414 868
- US-A- 2 954 987
- US-A- 5 161 817
- US-A- 5 335 695
- US-A- 5 871 217

## Beschreibung

Die Erfindung betrifft ein Niveauregelventil zum selbsttätigen Konstanthalten der Fahrzeughöhe eines Nutzfahrzeuges mit Luftfederung mit den im Oberbegriff von Patentanspruch 1 genannten Merkmalen.

Aus der gattungsbildenden EP 0 556 086 B1 ist ein Niveauregelventil zum selbsttätigen Konstanthalten der Fahrzeughöhe eines Nutzfahrzeuges mit Luftfederung bekannt. Das Niveauregelventil besitzt ein Gehäuse, an dem Anschlüsse für Leitungen verwirklicht sind. Eine Leitung ist von einem Druckluftvorrat herangeführt. Eine weitere Leitung führt zu mindestens einem Luftfederbalg. Schließlich ist auch ein Entlüftungsauslass vorgesehen. Im Innern des Gehäuses sind zwei plattenförmige Ventilelemente aus keramischem Werkstoff vorgesehen, die unter hoher Planparallelität dichtend flächig aneinander liegen. Das erste Ventilelement ist in dem Gehäuse ortsfest gelagert und besitzt Durchbrechungen für die Durchleitung von Druckluft. Das zweite Ventilelement ist mit einem Verstelltrieb verbunden und über diesen Verstelltrieb im Gehäuse und relativ zu dem ortsfest gelagerten ersten Ventilelement verschwenkbar. Die beiden Ventilelemente können in eine Belüftungsstellung, eine Entlüftungsstellung und eine Abschlussstellung verbracht werden. Die Abschlussstellung entspricht der vorgesehenen Fahrzeughöhe, welche unabhängig von der jeweiligen Beladung des Fahrzeuges immer eingenommen wird. Die Einstellung einer zweiten Fahrzeughöhe ist nicht möglich.

Um eine Steueranlage zum selbsttätigen Konstanthalten von zwei wahlweise nutzbaren Fahrzeughöhen zu schaffen, ist es aus der US 5,651,555 bekannt, die Anzahl der Niveauregelventile zu verdoppeln und jedes Niveauregelventil über einen eigenen Verstelltrieb oder einen gemeinsamen Verstelltrieb anzusteuern. Beide Niveauregelventile können über eine gemeinsame Drehstange miteinander verbunden sein. Die Steuerung erfolgt jedoch derart, dass entweder nur das eine Niveauregelventil oder das andere Niveauregelventil die jeweilige Fahrzeughöhe einsteuert. Beide Niveauregelventile besitzen je eine Rotationsscheibe, in der Durchlässe vorgesehen sind. Die beiden Scheiben der beiden Niveauregelventile sind gegeneinander phasenversetzt. Jede Scheibe besitzt zwei langlochartige Durchbrechungen. Die Durchbrechungen können als Kanäle ausgebildet sein und arbeiten mit durchbrochenen Ventilkörpern zusammen. Es arbeitet jedoch nur immer wahlweise eines der beiden Niveauregelventile. Die Umschaltung kann willkürlich oder druckluftgesteuert erfolgen.

Aus der DE 196 07 619 C1 ist ein herkömmlich aufgebautes Niveauregelventil zum selbsttätigen Konstanthalten der Fahrgestellhöhe eines Nutzfahrzeuges mit Luftfederung bekannt. Es wird hier ein Doppelventilkörper eingesetzt, der mit einem Auslasssitz an einer hohlen Steuerstange ein Auslassventil und mit einem gehäusefesten Sitz ein Einlassventil bildet. Auch an einem solchen Niveauregelventil ist eine Belüftungsstellung, eine Entlüftungsstellung und eine Abschlussstellung für die Luftfederbälge möglich. Der Stößel des Niveauregelventils wird über einen Verstelltrieb betätigt, der eine Exzenterwelle verdreht. Der Exzenternocken der Exzenterwelle verschiebt ein Führungsstück, welches wiederum gegen den Ventilstößel anliegt. Durch einen Steuerkolben mit einer belüftbaren Steuerkammer ist es möglich, gleichsam die wirksame Länge zwischen Führungsstück und Ventilstößel zu verändern, um mit der Belüftung der Steuerkammer die zweite Fahrzeughöhe einzustellen. Diese Einstellung wird dadurch bewirkt, dass lediglich der Auslasssitz, nicht aber der Einlasssitz in eine andere Relativlage verbracht wird.

Der Erfindung liegt die Aufgabe zugrunde, ein Niveauregelventil der eingangs beschriebenen Art aufzuzeigen, bei dem zwei plattenförmige Ventilelemente Anwendung finden und welches dennoch wahlweise auf zwei Fahrzeughöhen einstellbar ist.

Erfindungsgemäß wird dies dadurch erreicht, dass auch das zweite plattenförmige Ventilelement im Gehäuse beweglich gelagert ist, und dass eine Betätigungseinrichtung zum Bewegen des zweiten plattenförmigen Ventilelements aus einer einer ersten Fahrzeughöhe entsprechenden Stellung in eine einer zweiten Fahrzeughöhe entsprechende Stellung und umgekehrt vorgesehen ist.

Die Erfindung geht von dem Gedanken aus, beide plattenförmige Ventilelemente im Gehäuse beweglich zu lagern. Die Bewegbarkeit des ersten plattenförmigen Ventilelementes richtet sich nach den über den Verstelltrieb übertragenen Bewegungen. Die bewegliche Lagerung des zweiten plattenförmigen Ventilelementes ist den unterschiedlichen Fahrzeughöhen zugeordnet. Dabei bestimmt eine erste Stellung eine erste Fahrzeughöhe und eine zweite Stellung eine zweite Fahrzeughöhe usw.. Es ist in irgendeiner Form eine Betätigungseinrichtung vorgesehen, die eine willkürliche Einstellung der jeweils gewünschten Fahrzeughöhen ermöglicht. Damit wird auch bei einem Niveauregelventil, welches mit Hilfe der zwei plattenförmigen Ventilelemente gleichsam als Schieber ausgebildet ist, erreicht, dass die Leitungsverbindungen trotz dieser Beweglichkeit so angeordnet werden können, dass sich in jeder der Fahrstellungen eine einwandfreie sinngemäße Funktion des Niveauregelventils ergibt. Die Anordnung der Verbindungskanäle und Verbindungsdurchbrechungen kann konstruktiv festgelegt werden, so dass in beiden oder in allen Fahrzeughöhen beispielsweise die Belüftung der Luftfederbälge über die gleichen Durchbrechungen erfolgt. Die dargestellten Ausführungsformen gestatten es, die Anschlüsse für Vorrat und Entlüftung auch vertauscht zu belegen. Dies erbringt den Vorteil, dass das gleiche Niveauregelventil wahlweise der einen oder anderen Fahrzeugseite zugeordnet werden kann. Mit besonderem Vorteil lassen sich die beiden plattenförmigen Ventilelemente aus keramischem Werkstoff herstellen. Solche plattenförmigen Ventilelemente können dann einfach mit hoher Planarität ihrer Flächen hergestellt und dichtend eingesetzt werden, so dass die zusätzliche Anordnung von Dichtelementen zwischen den beiden Ventilelementen entfällt. Die Durchbrechungen und Kanäle in den beiden Ventilelementen lassen sich in einfacher Weise während der Herstellung der Ventilelemente ausbilden bzw. einformen. Eine nachträgliche Bearbeitung entfällt. Die Verbindungskanäle bzw. Durchbrechungen in den beiden plattenförmigen Ventilelementen können auch in ihren Querschnitten und Querschnittsverläufen entsprechend einfach gestaltet und dimensioniert werden, so dass eine beabsichtigte Drosselwirkung oder auch eine schnelle Entlüftung in einfacher Weise bewirkt werden kann. Das neu ausgestaltete Niveauregelventil lässt die Einstellung mindestens zweier Fahrzeughöhen zu. Es setzt sich deutlich von dem im Stand der Technik vorgezeichneten Weg der Anordnung zweier Niveauregelventile nebeneinander ab. Die zweite Fahrzeughöhe kann in einfacher Weise einstellbar gestaltet werden.

Vorteilhafte Weiterbildungen des Niveauregelventils sind in den Unteransprüchen festgehalten.

Die Erfindung wird anhand verschiedener Ausführungsbeispiele weiter erläutert und beschrieben. Es zeigen:
- Fig. 1: die schematische Darstellung eines Niveauregelventils in Verbindung mit den angeschlossenen Elementen,
- Fig. 2: einen Schnitt durch eine erste Ausführungsform des Niveauregelventils gemäß der Linie II-II in Fig. 3,
- Fig. 3: einen Horizontalschnitt durch das Niveauregelventil gemäß Fig. 2,
- Fig. 4: eine ähnliche Darstellung wie Fig. 3 mit dem Niveauregelventil in der Stellung Belüften,
- Fig. 5: eine ähnliche Darstellung wie Fig. 3 mit dem Niveauregelventil in der Stellung Entlüften,
- Fig. 6: eine ähnliche Darstellung des Niveauregelventils gemäß den Fig. 3-5, jedoch während des Verstellens in eine zweite Fahrzeughöhe,
- Fig. 7: eine ähnliche Schnittdarstellung, jedoch bei einer anderen Ausführungsform des Niveauregelventils in Abschlussstellung in der ersten Fahrzeughöhe,
- Fig. 8: das Niveauregelventil gemäß Fig. 7 in der Stellung Belüften bei der ersten eingestellten Fahrzeughöhe,
- Fig. 9: das Niveauregelventil der Fig. 7 und 8 zu Beginn des Einstellens der zweiten Fahrzeughöhe,
- Fig. 10: eine Schnittdarstellung einer weiteren Ausführungsform des Niveauregelventils, eingestellt auf eine dritte Fahrzeughöhe,
- Fig. 11: einen Schnitt durch ein Niveauregelventil ähnlich der Darstellung der Fig. 2, jedoch mit einem Schnellentlüftungsventil,
- Fig. 12: eine ähnliche Darstellung eines Niveauregelventils wie Fig. 11, jedoch eingestellt auf eine zweite Fahrzeughöhe und eine andere Ausführungsform des Schnellentlüftungsventils,
- Fig. 13: eine Schnittdarstellung eines Niveauregelventils, bei dem die beiden Fahrzeughöhen jeweils einstellbar sind,
- Fig. 14: einen Schnitt durch ein Niveauregelventil ähnlich der Schnittdarstellung der Fig. 3, bei dem die beiden plattenförmigen Ventilelemente rechtwinklig zu einander bewegbar angeordnet sind, und
- Fig. 15: eine Schnittdarstellung einer weiteren Ausführungsform des Niveauregelventils mit einer Einstellmöglichkeit auf drei unterschiedliche Fahrzeughöhen.

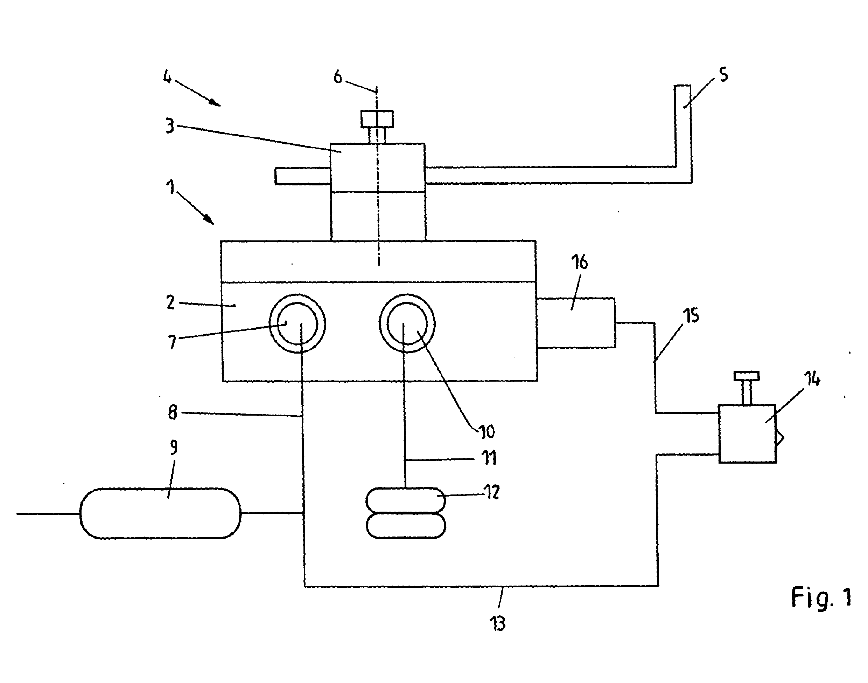

In Fig. 1 ist ein Niveauregelventil 1 mit seinem Gehäuse 2 verdeutlicht. Das Gehäuse 2 ist zweckmäßig mehrteilig ausgebildet, um einen Innenraum zur Unterbringung verschiedener Ventilelemente zu schaffen. Am Gehäuse 2 des Niveauregelventils 1 ist eine Betätigungswelle 3 drehbar gelagert, die Bestandteil eines Verstelltriebes 4 ist, der die Fahrzeughöhe abtastet. Die Betätigungswelle 3 ist über einen Anlenkhebel 5 mit dem Fahrgestell verbunden, während das Gehäuse 2 und damit das Niveauregelventil 1 auf dem Fahrzeugaufbau angeordnet ist. Der Anlenkhebel 5 führt eine Drehbewegung um die Achse 6 der Betätigungswelle 3 aus. Der Verstelltrieb 4 überträgt die Bewegungen zwischen Fahrgestell und Fahrzeugaufbau in das Innere des Gehäuses 2 des Niveauregelventils 1.

Am Gehäuse 2 des Niveauregelventils 1 ist ein Anschluss 7 für eine Leitung 8 vorgesehen, die von einem Vorratsbehälter 9 an das Niveauregelventil 1 herangeführt ist. Von einem Anschluss 10 führt eine Leitung 11 zu einem Luftfederbalg 12. Es versteht sich, dass hier auch mehrere Anschlüsse oder Leitungsverzweigungen zu einer Mehrzahl von Luftfederbälgen 12 vorgesehen sein können. Dies ist insbesondere dann der Fall, wenn es auf eine Querdrosselfunktion zwischen Luftfederbälgen verschiedener Fahrzeugseiten ankommt. Von dem Vorratsbehälter 9 führt eine weitere Leitung 13 zu einem Betätigungsventil 14, welches hier als manuell betätigbares Wegeventil ausgebildet ist, einen eigenen Entlüftungsanschluss aufweist und das über eine Leitung 15 zu einem Steueranschluss 16 am Gehäuse 2 des Niveauregelventils 1 herangeführt ist. Das Betätigungsventil 14 kann auch in anderer Weise realisiert werden, beispielsweise als elektrisch ansteuerbares Magnetventil oder als stößelbetätigtes 3/2-Wegeventil. Das Betätigungsventil 14 wird immer dann betätigt, wenn die zweite Fahrzeughöhe eingestellt werden soll. Es werden vorliegend mindestens zwei Fahrzeughöhen unterschieden, wobei es letztlich gleichgültig ist, welche der Fahrzeughöhen als erste und welche als zweite Höhe bezeichnet wird und welche Fahrzeughöhe unterhalb der anderen Fahrzeughöhe liegt.

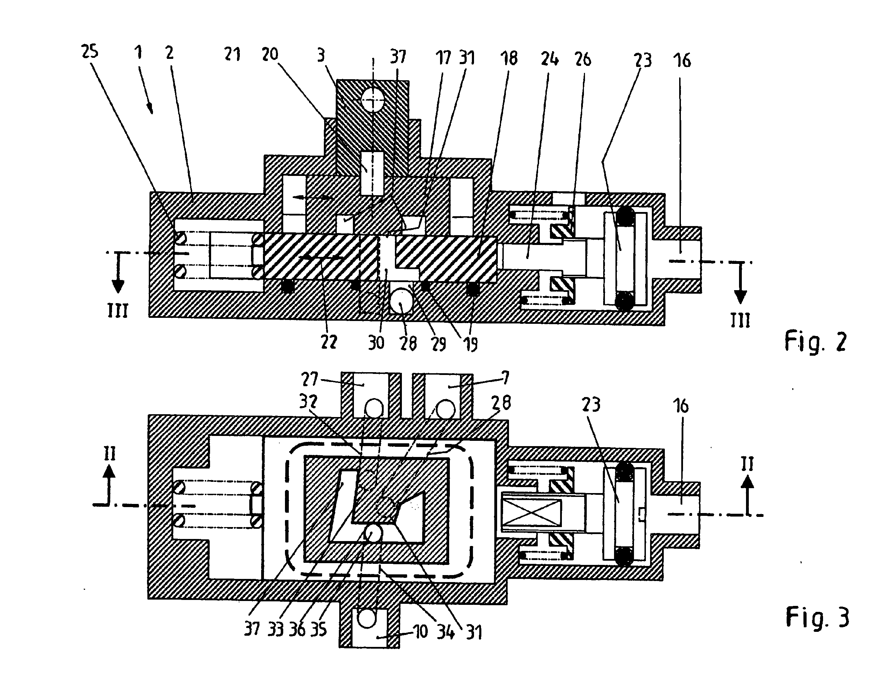

In den Fig. 2 und 3 ist eine erste Ausführungsform des Niveauregelventils anhand zweier senkrecht zueinander stehender Schnitte verdeutlicht. Im Gehäuse 2 ist ein erstes plattenförmiges Ventilelement 17 und ein zweites plattenförmiges Ventilelement 18 dargestellt. Die Ventilelemente 17 und 18 sind platten- oder scheibenartig ausgebildet und bestehen aus Keramik, Kunststoff, Metall oder einer Keramik-Kunststoff-Kombination. Es handelt sich um Formkörper, die Flächen mit hoher Planarität aufweisen. Die Ventilelemente 17 und 18 liegen auf einer solchen Fläche mit hoher Planarität aneinander an. Es wird ausdrücklich darauf hingewiesen, dass hier keinerlei Dichtungen erforderlich sind. Die Abdichtung zwischen den beiden Ventilelementen 17 und 18 wird durch die große Planparallelität der Flächen erreicht. Auf der Unterseite liegt das zweite Ventilelement 18 an dem Gehäuse 2 des Niveauregelventils an. Das Gehäuse 2 besteht vorzugsweise aus Kunststoff, kann aber auch aus Metall bestehen. Es wird auf eine genaue Bearbeitung des Gehäuses unter Schaffung von Flächen hoher Planparallelität verzichtet. Stattdessen werden hier zu Dichtungszwecken Dichtungen 19 eingesetzt, die gleichzeitig den Vorteil erbringen, dass sie die Ventilelemente 17 und 18 gegeneinander vorspannen.

Aus Fig. 2 ist erkennbar, dass an der Betätigungswelle 3 ein exzentrisch angeordneter Nocken 20 vorgesehen ist, der an dem ersten plattenförmigen Ventilelement 17 angreift und damit die Drehbewegung der Betätigungswelle 3 auf das Ventilelement 17 überträgt. Das Ventilelement 17 kann linear oder auch rotierend bewegbar vorgesehen sein. Je nach dem muss die Verbindung zwischen dem Nocken 20 und dem Ventilelement 17 so gestaltet werden, dass die betreffende Bewegung möglich ist. Dies geschieht beispielsweise bei Umformung der Drehbewegung in eine lineare Bewegung des Ventilelementes 17 mit einem aus Übersichtlichkeitsgründen nicht dargestellten Schlitz. Das Ventilelement 17 gemäß dem Ausführungsbeispiel der Fig. 2 und 3 wird linear bewegt entsprechend einem Doppelpfeil 21.

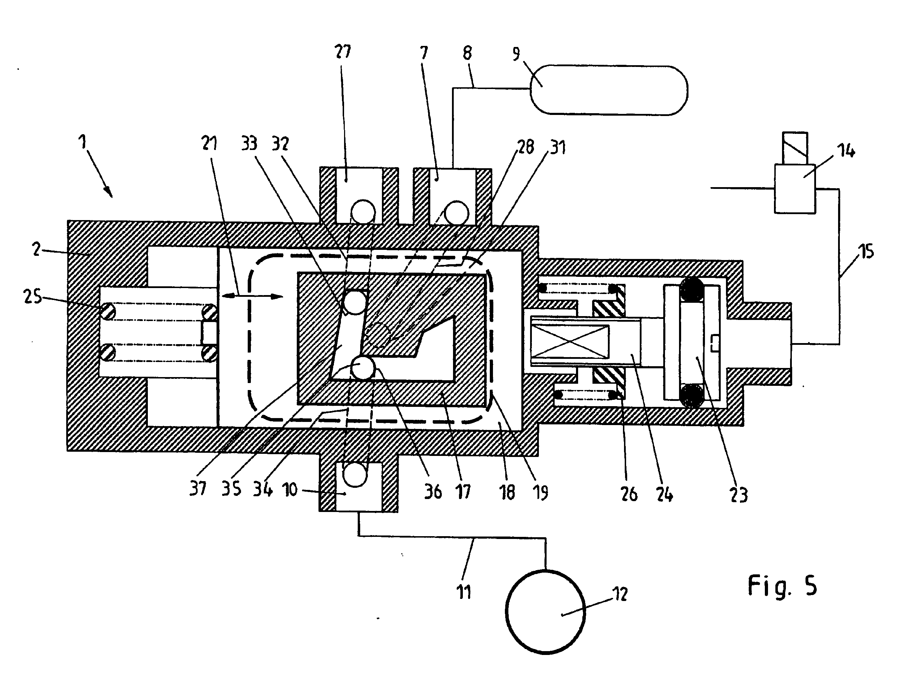

Auch das zweite Ventilelement 18 ist nunmehr beweglich im Gehäuse 2 des Niveauregelventils 1 angeordnet und geführt. Die Bewegung geschieht gemäß Doppelpfeil 22 und ist mit der Einstellung der ersten und der zweiten Fahrzeughöhe verbunden. Zur Einstellung der ersten oder zweiten Fahrzeughöhe ist im Gehäuse 2 des Niveauregelventils 1 ein Steuerkolben 23 mit Kolbenstange 24 vorgesehen, welches über das Betätigungsventil 14 und die Leitung 15 sowie den Steueranschluss 16 beaufschlagt wird. Die unbelüftete Stellung wird durch eine Feder 25 gesichert. Damit ist erkennbar, dass das zweite Elementelement 18 zwei Stellungen einnehmen kann, die den beiden Fahrzeughöhen zugeordnet sind. Auf der Kolbenstange 24 kann ein in einem Gewinde verstellbarer Anschlag 26 angebracht sein, der bei Betätigung des Steuerkolbens 23 am Gehäuse 2 anschlägt und damit den Hub des Steuerkolbens begrenzt. Auf diese Art und Weise wird die zweite Fahrzeughöhe und damit die Relativlage des zweiten plattenförmigen Ventilelementes 18 festgelegt. Die Kolbenstange 24 kann ansonsten frei gegen das Ventilelement 18 anschlagen oder auch formschlüssig (Fig. 5) mit dem Ventilelement 18 verbunden sein.

Am Gehäuse 2 (Fig. 3) sind neben den Anschlüssen 7, 10 und 16 ein zur Atmosphäre führender Entlüftungsanschluss 27 vorgesehen. Über diesen Anschluss 27 erfolgt die Entlüftung der Luftfederbälge 12.

Die beiden Ventilelemente 17 und 18 sind mit Durchbrechungen, Kanälen, Nuten o. dgl. durchzogen, die eine komplizierte Anordnung und Ausbildung aufweisen. Diese Kanäle sind so gelegt, dass die erforderlichen Funktionen des Niveauregelventils, nämlich das Belüften der Luftfederbälge 12, das Entlüften der Luftfederbälge 12 sowie die Abschlussstellungen in den beiden Fahrzeughöhen, realisiert werden können. Von dem Anschluss 7, an den der Vorratsbehälter 9 angeschlossen ist, führt ein in Fig. 3 gestrichelt angedeuteter Kanal 28 innerhalb des Gehäuses 2 zu einer Bohrung 29 (Fig. 2), die in Fig. 3 nicht dargestellt ist. Das Ventilelement 18 wird von einem Kanal 30 durchsetzt, der an die Bohrung 29 Anschluss hat und auf der dem Ventilelement 17 zugekehrten Seite in einer kreisrunden Öffnung 31 endet, die auch in Fig. 3 gestrichelt angedeutet ist. Aus den Fig. 2 und 3 ist erkennbar, dass der Kanal 30 bzw. die Öffnung 31 durch das erste Ventilelement 17 abgedeckt ist, so dass der Vorrat hier abgeschlossen ist. Das Niveauregelventil der Fig. 2 und 3 befindet sich in der ersten Fahrzeughöhe in der Abschlussstellung.

In ähnlicher Weise führt von dem Entlüftungsanschluss 27 ein Kanal 32 durch das Gehäuse 2 unterhalb des zweiten Ventilelementes 18. Das zweite Ventilelement 18 besitzt hier einen weiteren nicht dargestellten Kanal, der ähnlich wie der Kanal 30 ausgebildet ist. Dieser Kanal endet in einer kreisrunden Öffnung 33 auf der Oberseite des Ventilelementes 2. Auch diese Öffnung 33, die somit zur Entlüftung führt, ist durch das Ventilelement 17 abgedeckt bzw. verschlossen.

Von dem Anschluss 10, an den die Luftfederbälge 12 angeschlossen sind, führt ein Kanal 34 im Gehäuse 2 bis unter das zweite Ventilelement 18. Ähnlich wie der schon angedeutete Kanal 30 besitzt das zweite Ventilelement 18 einen Kanal 35, der in einer kreisrunden Öffnung 36 endet. Das erste plattenförmige Ventilelement 17 besitzt auf seiner Unterseite einen nutenförmigen Verbindungskanal 37, der sowohl in Fig. 2 als auch in Fig. 3 sichtbar ist. Die Öffnung 36 liegt innerhalb dieses Verbindungskanals 37, so dass die Luftfederbälge 12 belüftet und abgeschlossen sind.

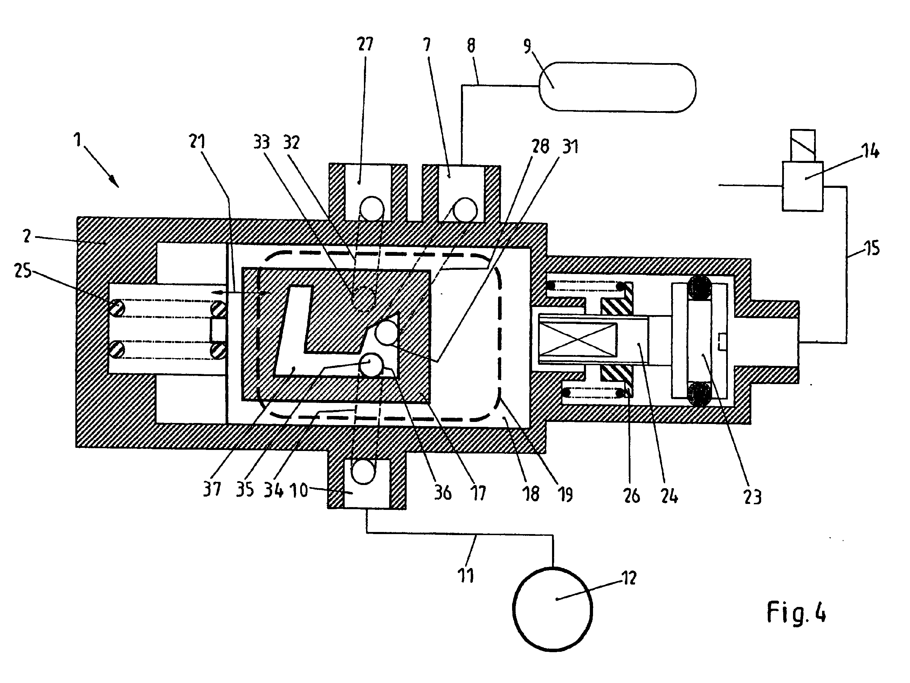

Fig. 4 zeigt das Niveauregelventil gemäß den Fig. 2 und 3 in einer gegenüber Fig. 3 vergrößerten Darstellung bei eingestellter erster Fahrzeughöhe und während des Belüftens der Luftfederbälge 12. Es ist erkennbar, dass ausgehend von dem Vorratsbehälter 9 über die Leitung 8 und den Anschluss 7 Druckluft durch den Kanal 28 und durch die Öffnung 31 in den Verbindungskanal 37 des Ventilelementes 17 übertritt. Weiterhin besteht Verbindung über die Öffnung 36, den Kanal 35 und den Kanal 34 zum Anschluss 10 für die Leitung 11 zu den Luftfederbälgen 12, so dass Druckluft letztendlich zu den Luftfederbälgen 12 gelangt. Gleichzeitig ist erkennbar, dass die Öffnung 33 des Kanals 32 zur Atmosphäre abgeschlossen ist.

Fig. 5 verdeutlicht die Entlüftungsstellung dieses Niveauregelventils 1. Es ist erkennbar, dass die Öffnung 31 des Kanals 28 abgesperrt wird. Dagegen besteht Verbindung zwischen dem Luftfederbalg 12 über die Leitung 11 und den Anschluss 10 in den Kanal 34, dessen Öffnung 35 über den Verbindungskanal 37 Anschluss an die Öffnung 33 des Verbindungskanals 32 besitzt, so dass Druckluft aus dem Luftfederbalg 12 in die Atmosphäre entweichen kann.

Abweichend von Fig. 4 ist hier die Kolbenstange 24 formschlüssig mit dem zweiten plattenförmigen Ventilelement 18 verbunden. Die Stellung zeigt die eingestellte erste Fahrzeughöhe, wobei das Betätigungsventil 14, hier in der Ausbildung als Magnetventil, sich in seiner Schließstellung befindet.

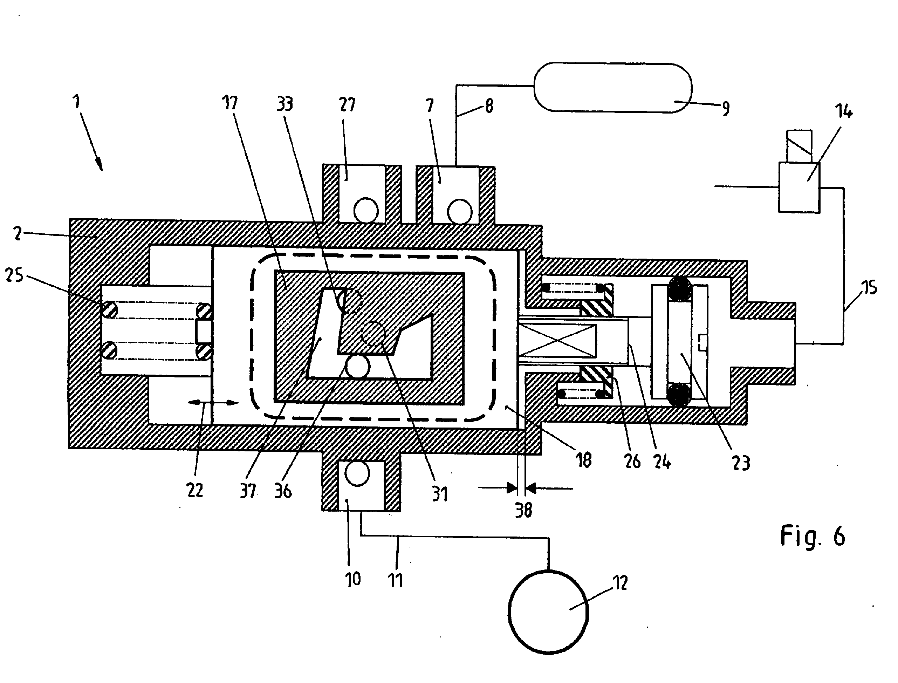

Fig. 6 verdeutlicht eine Zwischenstellung, die während der Einstellung bzw. des Erreichens einer zweiten Fahrzeughöhe von den Elementen eingenommen wird. Über das Betätigungsventil 14 gelangt Steuerluft über die Leitung 15 auf den Steuerkolben 23, so dass dessen Kolbenstange 24 das Ventilelement 18 um den Hub 38 gemäß Doppelpfeil 22 verschiebt. Die Endstellung wird durch Anschlagen des Anschlags 26 an dem Gehäuse 2 erreicht. Es ist erkennbar, dass die Luftfederbälge 12 an den Entlüftungsanschluss 27 angeschlossen sind, so dass eine Entlüftung der Luftfederbälge 12 stattfindet, bis die zweite (niedrigere) Fahrzeughöhe eingenommen ist. Dabei werden verschiedene Zwischenstellungen durchlaufen, bei denen der Anlenkhebel 5 seine Normalstellung verlassen hat. Am Ende dieser Bewegungen stellt sich wieder eine Abschlussstellung ein, wie dies Fig. 3 zeigt.

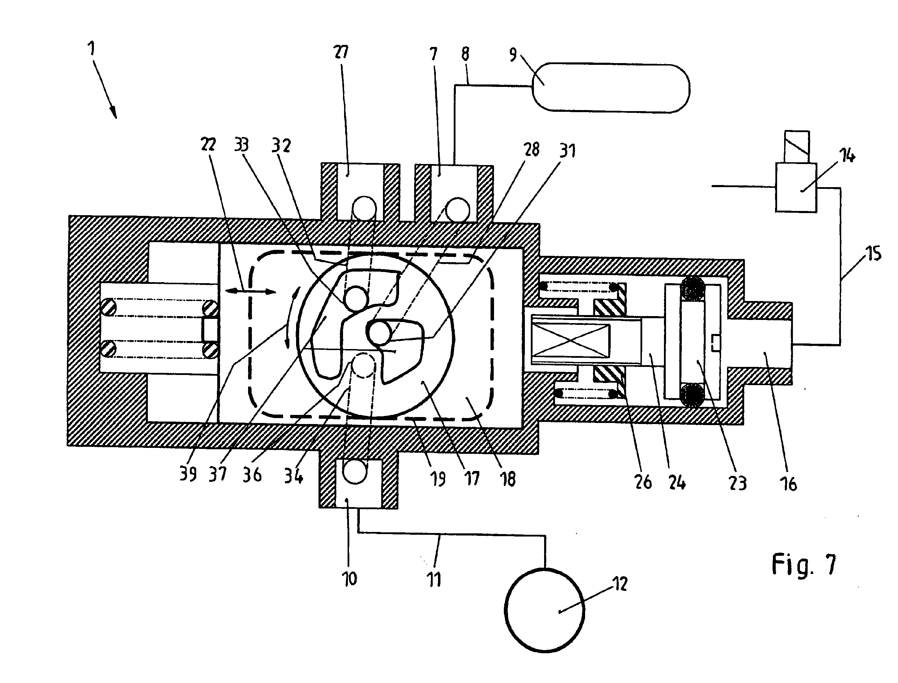

Fig. 7 zeigt eine weitere Ausführungsform des Niveauregelventils 1. Das erste plattenförmige Ventilelement 17 ist hier als kreisförmige Scheibe ausgebildet. Es wird über die Betätigungswelle 3 rotierend angetrieben, und zwar gemäß Doppelpfeil 39. Die Betätigungswelle 3 und das Ventilelement 17 können hier einstückig oder direkt aneinander angeflanscht ausgebildet sein, da es auf die Übertragung der Drehbewegung in eine lineare Bewegung bezüglich des Ventilelements 17 nicht mehr ankommt. Das zweite plattenförmige Ventilelement 18 ist nach wie vor linear gemäß Doppelpfeil 22 beweglich vorgesehen, um die beiden Fahrzeughöhen einstellbar zu machen. Wie ersichtlich besteht der Verbindungskanal 37 aus zwei getrennten Kanalabschnitten innerhalb des Ventilelementes 17. Die übrigen Kanäle, Öffnungen und Anschlüsse sind wiederum so angeordnet und untergebracht, wie dies vorangehend bereits beschrieben wurde. Die Ausbildung gemäß Fig. 7 unterscheidet sich von den vorangehenden Ausführungsformen, beispielsweise gemäß Fig. 6 dadurch, dass die Öffnung 36 in der Abschlussstellung abgeschlossen ist, also nicht mit dem Verbindungskanal 37 in Verbindung steht. Umgekehrt haben die Öffnungen 33 und 31 in der Abschlussstellung jeweils Anschluss an einen Teil des Verbindungskanals 37, so dass damit letztendlich erreicht wird, dass die Vorratsluft aus dem Behälter 9 nicht in den Entlüftungsanschluss 27 entweichen kann.

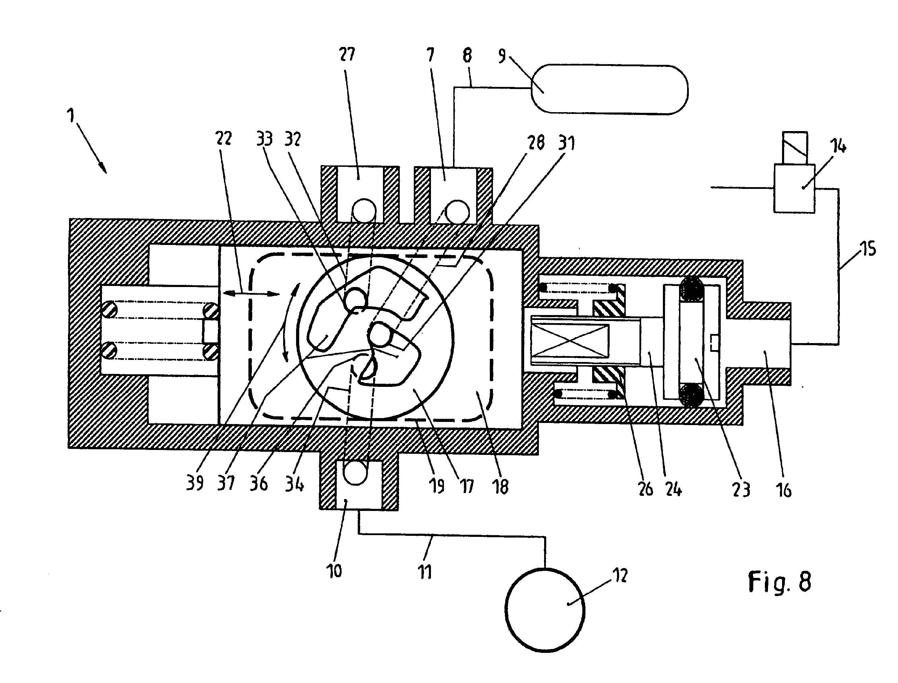

Fig. 8 zeigt das Niveauregelventil 1 gemäß Fig. 7 in der ersten eingestellten Fahrzeughöhe in der Stellung Belüften. Es ist erkennbar, dass Druckluft aus dem Vorratsbehälter 9 über die Leitung 8 zum Anschluss 7 und dann durch den Kanal 28 bis zur Öffnung 31 gelangt. Über den einen Teil des Verbindungskanals 37 besteht weiterhin Verbindung zu der Öffnung 36 des Kanals 34 und weiter über den Anschluss 10 und die Leitung 11 zu den Luftfederbälgen 12. Es ist weiterhin ersichtlich, dass der Entlüftungsanschluss 28 über den Kanal 32 zwar Verbindung zu der Öffnung 33 hat. Diese Öffnung 33 liegt aber innerhalb des einen Teils des Verbindungskanals 37 abgeschlossen.

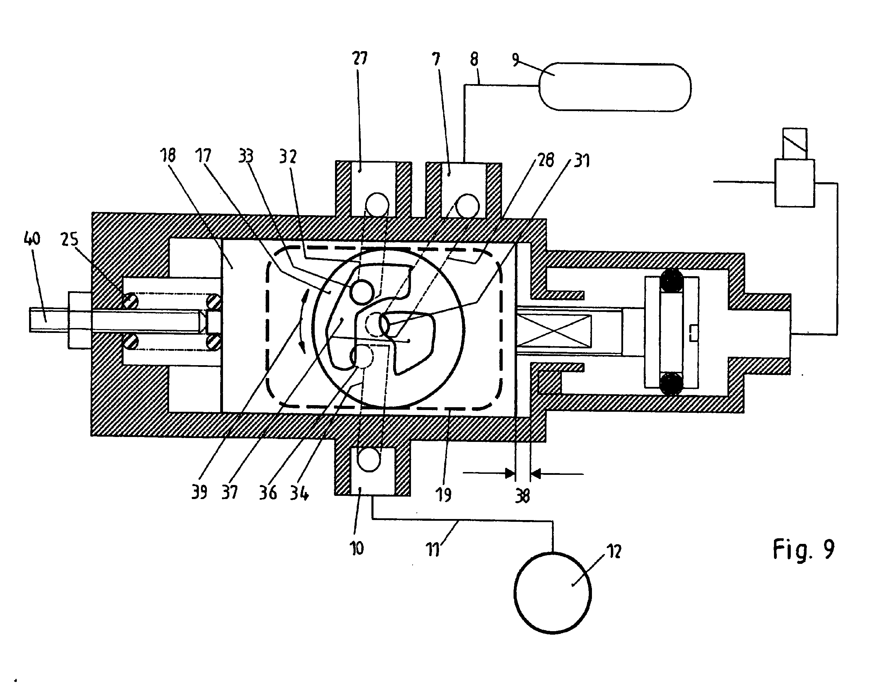

Fig. 9 zeigt das Niveauregelventil der Fig. 7 und 8 in einer Zwischenstellung zum Erreichen der zweiten Fahrzeughöhe. Mit Ausnahme der abweichenden Ausbildung der einzelnen Teile des Niveauregelventils, insbesondere des Ventilelements 17, kann diesbezüglich auf die Beschreibung der Fig. 6 hingewiesen werden. Es ist hier eine Einstellschraube 40 vorgesehen, die die Funktion des Anschlages 26 erfüllt und eine Einstellung der zweiten Fahrzeughöhe ermöglicht.

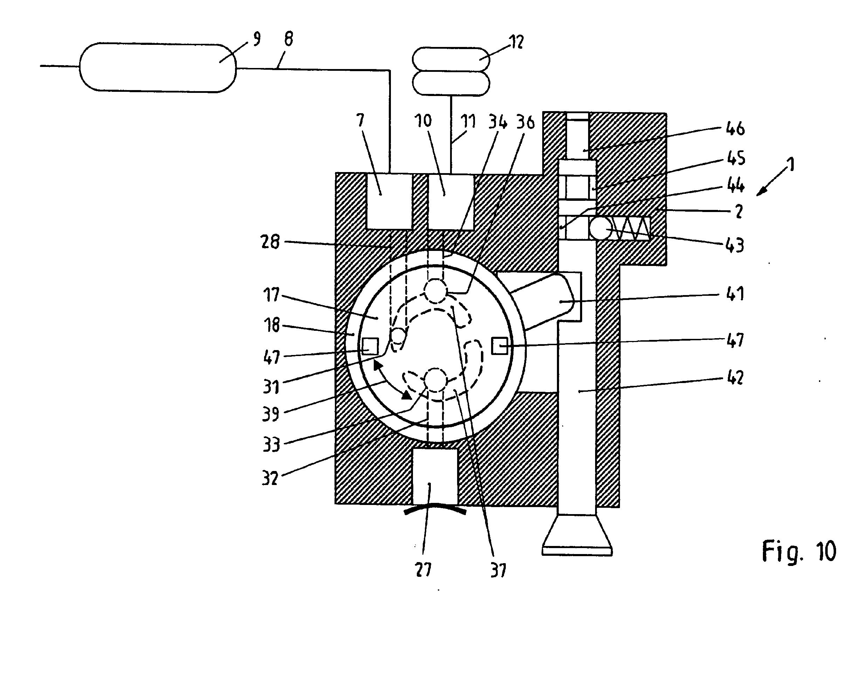

Fig. 10 zeigt eine weitere Ausführungsmöglichkeit des Niveauregelventils 1 mit seinem Gehäuse 2. Bei dieser Ausführungsform sind beide Ventilelemente 17 und 18 als verdrehbare Teile gemäß Doppelpfeil 39 vorgesehen. Die Ansteuerung des Ventilelements 17 über die Betätigungswelle 3 kann so erfolgen, wie dies zuvor bereits beschrieben wurde. Das Ventilelement 18 besitzt einen Verstellhebel 41, der mit einer manuell betätigbaren Verstellstange 42 zusammenarbeitet. Im Gehäuse 2 ist in Zuordnung zu der Verstellstange 42 eine Kugelverrastung 43 untergebracht, deren Kugel wahlweise in drei Nuten 44, 45, 46 eingreifen kann, die den drei Fahrzeughöhen zugeordnet sind. Die Kanäle 28, 32 und 34 mit ihren Öffnungen 31, 33 und 36 sind angedeutet. Der Verbindungskanal 37 besteht auch hier aus zwei sichelförmig angebrachten Nuten auf der Unterseite des Ventilelementes 17. Die Verstellstange 42 ist manuell betätigbar. Es ist leicht erkennbar, dass die Betätigung auch über eine Fernsteuerung, beispielsweise druckluftgesteuert o. dgl., erfolgen kann. Vertiefungen 47 in der Oberseite des Ventilelements 17 dienen dem Anschluss an die Betätigungswelle 3.

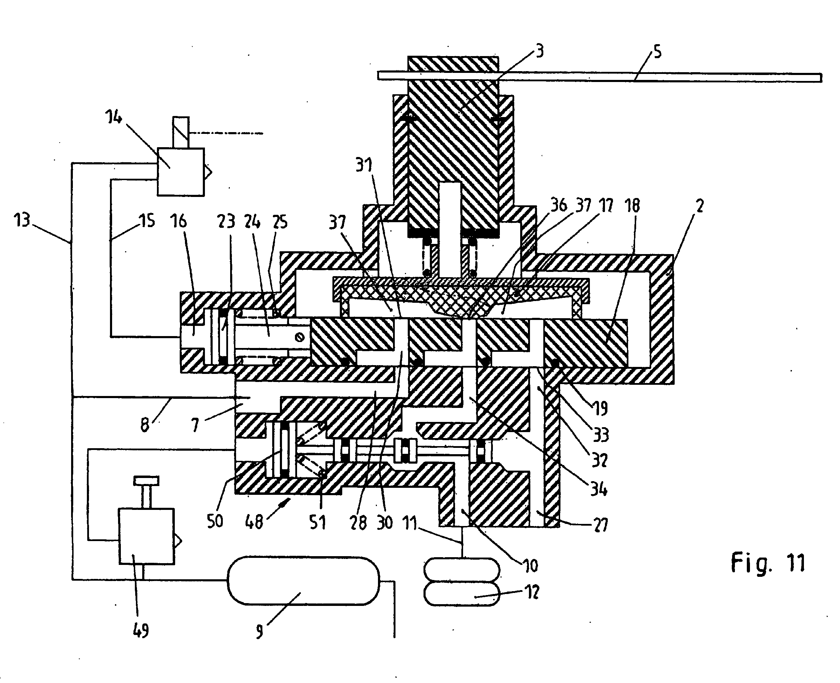

Fig. 11 zeigt eine weitere Ausführungsform, bei der das Ventilelement 17 drehbar angeordnet ist, während das Ventilelement 18 linear geführt ist. Das Niveauregelventil 1 besitzt zusätzlich ein Schnellentlüftungsventil 48, welches in der dargestellten Weise ausgebildet und im Gehäuse untergebracht ist. Es ist ein 3/2-Wegeventil 49 vorgesehen, mit dem ein Steuerkolben 50 mit Druckluft aus dem Vorratsbehälter 9 belüftet werden kann. Fig. 11 zeigt die nicht belüftete Stellung des Steuerkolbens, die durch eine Rückführfeder 51 gesichert ist. Es ist erkennbar, dass auf der Kolbenstange des Steuerkolbens verschiedene Dichtungen in zugeordneten Abständen vorgesehen sind, die mit Kanalerweiterungen zusammenarbeiten. In der gezeigten Ausgangsstellung besteht Verbindung zwischen dem Anschluss 10 der Luftfederbälge 12 und dem Kanal 34. Ebenso ist der Entlüftungsanschluss 27 von dem Anschluss 10 getrennt. Zur Schnellentlüftung wird der Steuerkolben 50 mit Druckluft über das 3/2-Wegeventil 49 beaufschlagt. Hierdurch wird der Kanal 34 von dem Anschluss 10 getrennt und mit dem Entlüftungsanschluss 27 direkt verbunden.

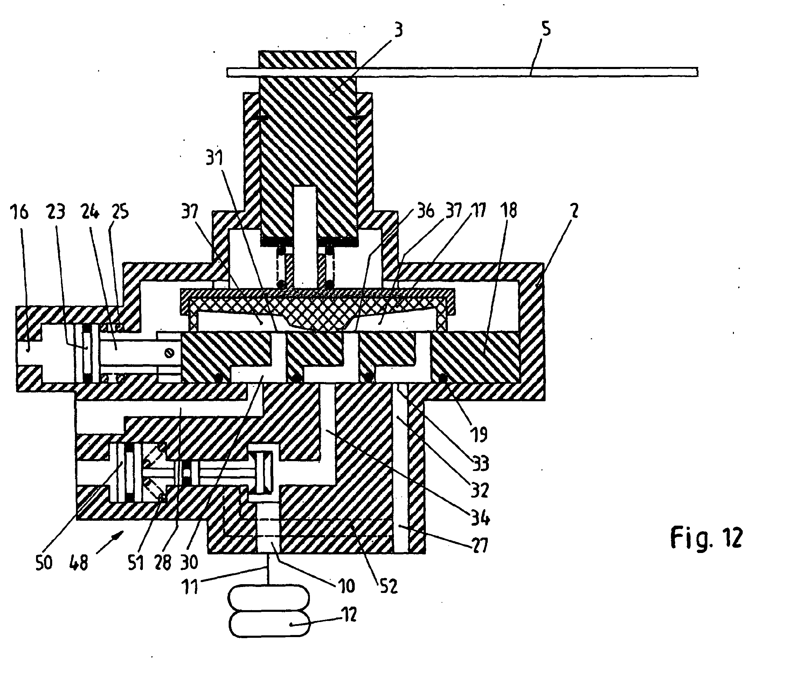

Fig. 12 zeigt eine ähnliche Ausführungsform des Niveauregelventils 1 wie Fig. 11. Auch hier ist ein Schnellentlüftungsventil 48 vorgesehen, welches jedoch etwas abweichend zu der Ausführungsform gemäß Fig. 11 ausgebildet ist. Im Gehäuse 2 ist hier ein gesonderter Entlüftungskanal 52 vorgesehen, über den bei Betätigung des Steuerkolbens 50 die Entlüftung der Luftfederbälge 12 in die Atmosphäre erfolgt. Es ist hier eine Stellung dargestellt, die dem Übergang in die zweite eingestellte Fahrzeughöhe entspricht.

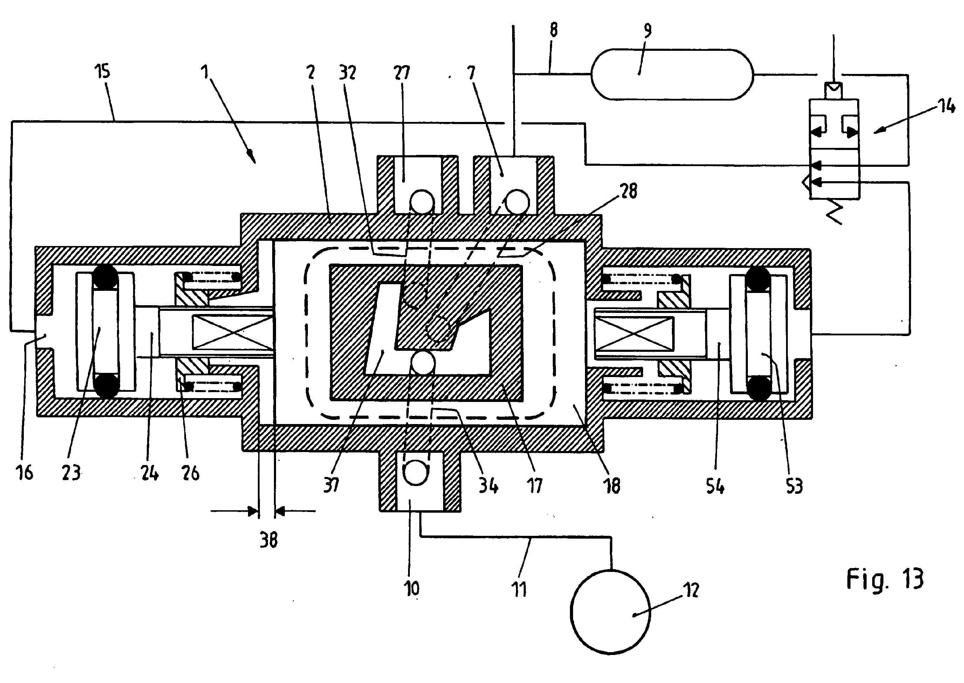

Die in Fig. 13 dargestellte Ausführungsform gleicht in mancher Hinsicht der Ausführungsform der Fig. 2-6. Es ist ein besonders ausgebildetes Betätigungsventil 14 vorgesehen, welches als Umschaltventil für die beiden Fahrzeughöhen dient. Auf der einen Seite ist der Steuerkolben 23 für die erste Fahrzeughöhe vorgesehen. Auf der anderen Seite befindet sich ein Steuerkolben 53 mit Kolbenstange 54, der der zweiten Fahrzeughöhe zugeordnet ist. Die beiden Steuerkolben 23 und 53 werden wahlweise bzw. wechselweise betätigt und verschieben das zweite plattenförmige Ventilelement 18 in Längsrichtung. Das erste plattenförmige Ventilelement 17 ist ebenfalls linear geführt.

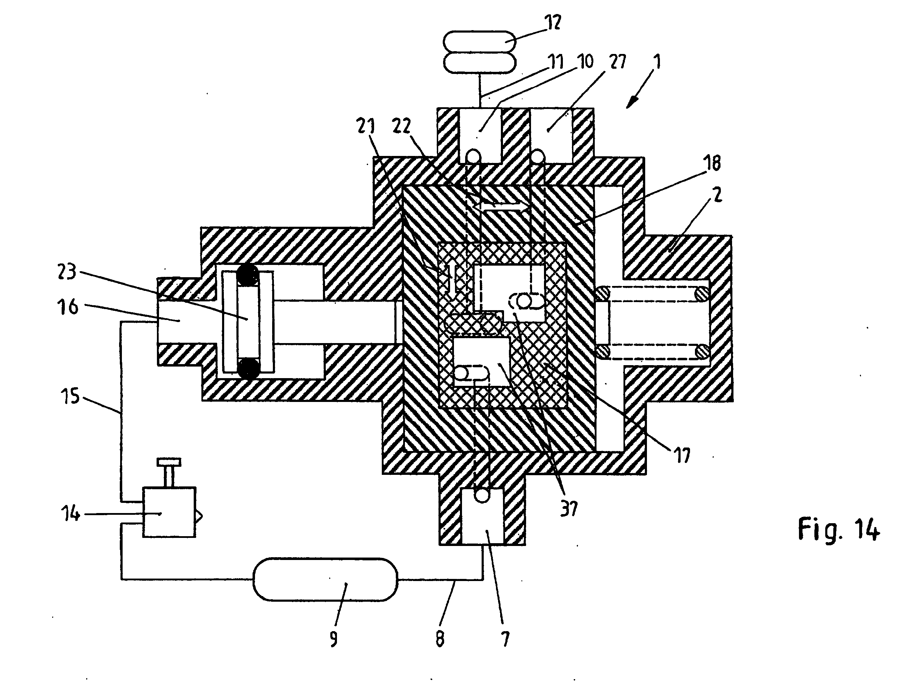

Fig. 14 zeigt eine Ausführungsform des Niveauregelventils 1, dessen Besonderheit darin besteht, dass das erste plattenförmige Ventilelement 17 gemäß Doppelpfeil 21 linear geführt ist. Dazu ist das zweite plattenförmige Ventilelement 18 gemäß Doppelpfeil 22 ebenfalls linear geführt. Wichtig ist, dass die beiden Richtungen der Doppelpfeile 21 und 22 rechtwinklig zueinander angeordnet sind, so dass die Verschiebung eines der beiden Ventilelemente die jeweilige Stellung des anderen Ventilelements unberührt lässt. Ansonsten kann auf vorherige Ausführungsformen verwiesen werden.

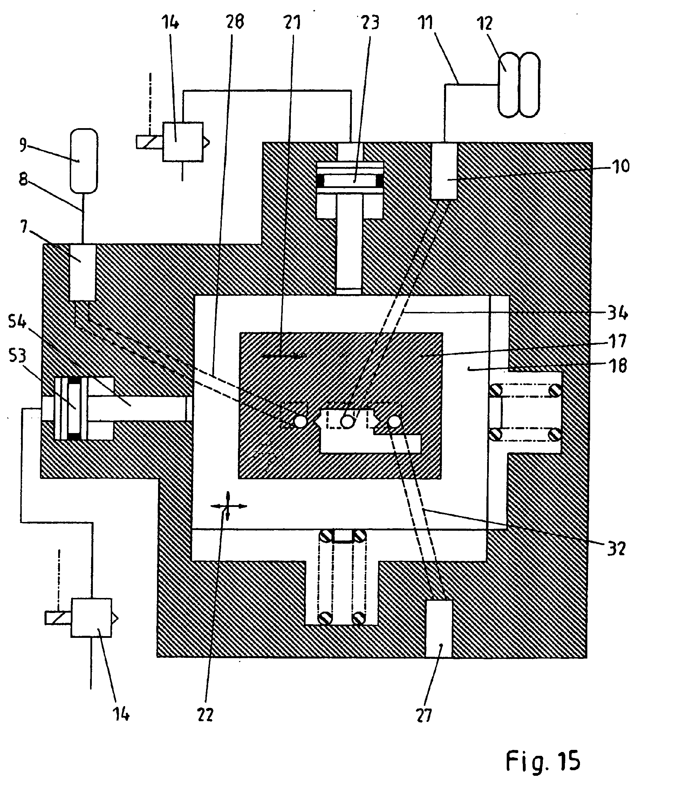

Fig. 15 zeigt schließlich eine weitere Ausführungsform des Niveauregelventils 1. Die Besonderheit besteht darin, dass das erste plattenförmige Ventilelement 17 gemäß Doppelpfeil 21 linear im Gehäuse 2 beweglich geführt ist. In Abstimmung dazu wird das Ventilelement 18 über den Steuerkolben 23 gemäß Doppelpfeil 22 linear und parallel zum Doppelpfeil 21 verschoben. Damit sind zwei Fahrzeughöhen einstellbar. Ein weiterer Steuerkolben 53 dient wahlweise zur Verschiebung des Ventilelements 18 in einer zum Doppelpfeil 22 senkrechten Richtung, womit eine dritte Fahrzeughöhe einstellbar ist.

### BEZUGSZEICHENLISTE

- 1 -: Niveauregelventil
- 2 -: Gehäuse
- 3 -: Betätigungswelle
- 4 -: Verstelltrieb
- 5 -: Anlenkhebel
- 6 -: Achse
- 7 -: Anschluss
- 8 -: Leitung
- 9 -: Vorratsbehälter
- 10 -: Anschluss
- 11 -: Leitung
- 12 -: Luftfederbalg
- 13 -: Leitung
- 14 -: Betätigungsventil
- 15 -: Leitung
- 16 -: Steueranschluss
- 17 -: Ventilelement
- 18 -: Ventilelement
- 19 -: Dichtung
- 20 -: Nocken

- 21 -: Doppelpfeil
- 22 -: Doppelpfeil
- 23 -: Steuerkolben
- 24 -: Kolbenstange
- 25 -: Feder
- 26 -: Anschlag
- 27 -: Entlüftungsanschluss
- 28 -: Kanal
- 29 -: Bohrung
- 30 -: Kanal
- 31 -: Öffnung
- 32 -: Kanal
- 33 -: Öffnung
- 34 -: Kanal
- 35 -: Kanal
- 36 -: Öffnung
- 37 -: Verbindungskanal
- 38 -: Hub
- 39 -: Doppelpfeil
- 40 -: Einstellschraube

- 41 -: Verstellhebel
- 42 -: Verstellstange
- 43 -: Kugelverrastung
- 44 -: Nut
- 45 -: Nut
- 46 -: Nut
- 47 -: Vertiefung
- 48 -: Schnellentlüftungsventil
- 49 -: 3/2-Wegeventil
- 50 -: Steuerkolben
- 51 -: Rückführfeder
- 52 -: Entlüftungskanal
- 53 -: Steuerkolben
- 54 -: Kolbenstange

## Patentansprüche

1. Niveauregelventil (1) zum selbsttätigen Konstanthalten der Fahrzeughöhe eines Nutzfahrzeuges mit Luftfederung, mit einem Gehäuse (2), an dem Anschlüsse (7, 10, 27) für Leitungen (8, 11) von einem Druckluftvorrat und zu mindestens einem Luftfederbalg (12) sowie zur Atmosphäre vorgesehen sind und in dem mindestens zwei plattenförmige Ventilelemente (17, 18) vorgesehen sind, die unter Vorspannung dichtend flächig aneinanderliegen und Verbindungskanäle bildende Durchbrechungen aufweisen, wobei das eine plattenförmige Ventilelement (17) über einen die Fahrzeughöhe abtastenden Verstelltrieb (4) im Gehäuse (2) so beweglich gelagert ist, dass wahlweise eine Belüftungsstellung, eine Entlüftungsstellung und eine Abschlussstellung möglich sind, **dadurch gekennzeichnet, dass** auch das zweite plattenförmige Ventilelement (18) im Gehäuse (2) beweglich gelagert ist, und dass eine Betätigungseinrichtung (14, 23, 24, 42, 53, 54) zum Bewegen des zweiten plattenförmigen Ventilelements (18) aus einer einer ersten Fahrzeughöhe entsprechenden Stellung in eine einer zweiten Fahrzeughöhe entsprechende Stellung und umgekehrt vorgesehen ist.

2. Niveauregelventil nach Anspruch 1, **dadurch gekennzeichnet, dass** das erste und/oder das zweite plattenförmige Ventilelement (17, 18) im Gehäuse (2) linear geführt ist.

3. Niveauregelventil nach Anspruch 1, **dadurch gekennzeichnet, dass** das erste und/oder das zweite plattenförmige Ventilelement (17, 18) im Gehäuse (2) drehbar geführt ist.

4. Niveauregelventil nach einem der Ansprüche 1 bis 3, **dadurch gekennzeichnet, dass** die beiden den zwei Fahrzeughöhen zugeordneten Stellungen des zweiten plattenförmigen Ventilelements (18) kraft- und/oder formschlüssig gesichert sind.

5. Niveauregelventil nach Anspruch 1, **dadurch gekennzeichnet, dass** die Betätigungseinrichtung als manuell betätigbarer Hebel (42) ausgebildet ist.

6. Niveauregelventil nach Anspruch 1, **dadurch gekennzeichnet, dass** die Betätigungseinrichtung einen Steuerkolben (23) mit Kolbenstange (24) aufweist.

7. Niveauregelventil nach Anspruch 6, **dadurch gekennzeichnet, dass** die Kolbenstange (24) mit dem zweiten plattenförmigen Ventilelement (18) verbunden ist.

8. Niveauregelventil nach Anspruch 1, **dadurch gekennzeichnet, dass** das zweite plattenförmige Ventilelement (18) im Gehäuse (2) gegen eine Feder (25) vorgespannt gelagert ist.

9. Niveauregelventil nach Anspruch 1, **dadurch gekennzeichnet, dass** zur genauen Einstellung der ersten und/oder der zweiten Fahrzeughöhe ein einstellbarer Anschlag (26) vorgesehen ist.

10. Niveauregelventil nach Anspruch 1, **dadurch gekennzeichnet, dass** das erste plattenförmige Ventilelement (17) einseitig einen U-förmigen Verbindungskanal (37) aufweist.

11. Niveauregelventil nach Anspruch 1, **dadurch gekennzeichnet, dass** das erste plattenförmige Ventilelement (18) einseitig zwei voneinander getrennte Verbindungskanäle (37) aufweist.

12. Niveauregelventil nach Anspruch 1, **dadurch gekennzeichnet, dass** das Niveauregelventil ein willkürlich schaltbares Schnellentlüftungsventil (48) aufweist, das unabhängig von der eingestellten Fahrzeughöhe eine schnelle Entlüftung der Luftfederbälge (12) ermöglicht.

## Claims

1. A levelling valve (1) for automatically keeping constant the vehicle height of a commercial vehicle with air suspension, including a housing (2), the housing having connections (7, 10, 27) for conduits (8, 11) from an air reservoir and to at least one suspension bellow (12) and to the atmosphere, at least two plate-like valve elements (17, 18) being arranged in the housing, the valve elements sealingly contacting each other in a common plane under prestress and having openings to form connection channels, the one plate-like valve element (17) being positioned in the housing (2) to be movable by an actuation drive (4) watching the vehicle height in a manner to make possible an aeration position or a vent position or a closing position, **characterized in that** the second plate-like valve element (18) is positioned in the housing (2) in a movable manner also, and **in that** an actuation unit (14, 23, 24, 42, 53, 54) is provided to move the second plate-like valve element (18) from a position representing a first vehicle height in a position representing a second vehicle height and vice versa.

2. The levelling valve of claim 1, **characterized in that** the first and/or the second plate-like valve element (17, 18) is linearly guided in the housing (2).

3. The levelling valve of claim 1, **characterized in that** the first and/or the second plate-like valve element (17, 18) is pivotally guided in the housing (2).

4. The levelling valve of one of the claims 1 to 3, **characterized in that** the two positions in accordance with the two vehicle heights of the second plate-like valve element (18) are secured with non-positive safety and/or positive fit.

5. The levelling valve of claim 1, **characterized in that** the actuation unit is a manually actable lever (42).

6. The levelling valve of claim 1, **characterized in that** the actuation unit comprises a control piston (23) having a piston rod (24).

7. The levelling valve of claim 6, **characterized in that** the piston rod (24) is connected with the second plate-like valve element (18).

8. The levelling valve of claim 1, **characterized in that** the second plate-like valve element (18) is arranged in the housing (2) in prestressed way by a spring (25).

9. The levelling valve of claim 1, **characterized in that** an adjustable stop (26) is arranged to exactly adjust the first and/or the second vehicle height.

10. The levelling valve of claim 1, **characterized in that** the first plate-like valve element (17) includes a connection channel (37) having U-form and being arranged on one surface of the element.

11. The levelling valve of claim 1, **characterized in that** the first plate-like valve element (17) includes two separate connection channels (37) being arranged on one surface of the element.

12. The levelling valve of claim 1, **characterized in that** the levelling valve includes an arbitrary controllable quick release valve (48) which allows quick venting of the suspension bellows (12) independent from the adjusted vehicle height.

## Revendications

1. Soupape de régulation de niveau (1) destinée à maintenir automatiquement constante la hauteur d'un véhicule utilitaire muni d'une suspension pneumatique, comportant un boîtier (2), sur lequel sont prévus des raccords (7, 10, 27) pour des conduites (8, 11) depuis une réserve d'air comprimé et vers au moins un soufflet à air (12), ainsi que vers l'atmosphère, et dans lequel sont prévus au moins deux éléments de soupape (17, 18) en forme de plaque, qui moyennant une précontrainte sont en appui étanche plan l'un contre l'autre et comportent des passages formant des conduits de liaison, l'un des éléments de soupape (17) en forme de plaque étant monté dans le boîtier (2) de manière mobile par l'intermédiaire d'une commande de réglage (4) explorant la hauteur du véhicule, de manière à permettre une position d'admission d'air, une position d'échappement d'air et une position de fermeture, **caractérisée en ce que** le deuxième élément de soupape (18) en forme de plaque est également monté mobile dans le boîtier (2), et **en ce qu'**un dispositif d'actionnement (14, 23, 24, 42, 53, 54) est prévu pour déplacer le deuxième élément de soupape (18) en forme de plaque hors d'une position correspondant à une première hauteur du véhicule dans une position correspondant à une deuxième hauteur du véhicule et inversement.

2. Soupape de régulation de niveau selon la revendication 1, **caractérisée en ce que** le premier et/ou le deuxième élément de soupape (17, 18) en forme de plaque sont logés de manière linéairement mobile dans le boîtier (2).

3. Soupape de régulation de niveau selon la revendication 1, **caractérisée en ce que** le premier et/ou le deuxième élément de soupape (17, 18) en forme de plaque sont logés de manière rotative dans le boîtier (2).

4. Soupape de régulation de niveau selon l'une quelconque des revendications 1 à 3, **caractérisée en ce que** le deuxième élément de soupape (18) en forme de plaque est immobilisé par conjugaison de force et/ou par conjugaison de forme dans les deux positions associées aux deux hauteurs du véhicule.

5. Soupape de régulation de niveau selon la revendication 1, **caractérisée en ce que** le dispositif d'actionnement est réalisé sous la forme d'un levier (42) apte à être actionné manuellement.

6. Soupape de régulation de niveau selon la revendication 1, **caractérisée en ce que** le dispositif d'actionnement comporte un piston de commande (23) avec une tige de piston (24).

7. Soupape de régulation de niveau selon la revendication 6, **caractérisée en ce que** la tige de piston (24) est reliée au deuxième élément de soupape (18) en forme de plaque.

8. Soupape de régulation de niveau selon la revendication 1, **caractérisée en ce que** le deuxième élément de soupape (18) en forme de plaque est monté sous précontrainte contre un ressort (25) dans le boîtier (2).

9. Soupape de régulation de niveau selon la revendication 1, **caractérisée en ce qu'**il est prévu une butée (26) réglable pour le réglage précis de la première et/ou de la deuxième hauteur du véhicule.

10. Soupape de régulation de niveau selon la revendication 1, **caractérisée en ce que** le premier élément de soupape (17) en forme de plaque comporte sur un côté un conduit de liaison (37) en forme de U.

11. Soupape de régulation de niveau selon la revendication 1, **caractérisée en ce que** le premier élément de soupape (17) en forme de plaque comporte sur un côté deux conduits de liaison (37) séparés l'un de l'autre.

12. Soupape de régulation de niveau selon la revendication 1, **caractérisée en ce que** la Soupape de régulation de niveau comporte une soupape d'échappement d'air (48) commutable volontairement, qui permet un échappement d'air rapide des soufflets à air (12) indépendamment de la hauteur réglée du véhicule.
